## Europäisches Patentamt
## European Patent Office
## Office européen des brevets

(19)

(11) Veröffentlichungsnummer: **0 212 185**
**B1**

(12) **EUROPÄISCHE PATENTSCHRIFT**

(45) Veröffentlichungstag der Patentschrift: **19.09.90**

(21) Anmeldenummer: **86109175.9**

(22) Anmeldetag: **04.07.86**

(51) Int. Cl.⁵: **A 01 D 41/00,** A 01 D 55/00, A 01 D 41/14

(54) Mähdrescher.

(30) Priorität: **22.08.85 DE 8524124 u**

(43) Veröffentlichungstag der Anmeldung:
**04.03.87 Patentblatt 87/10**

(45) Bekanntmachung des Hinweises auf die
Patenterteilung:
**19.09.90 Patentblatt 90/38**

(84) Benannte Vertragsstaaten:
**DE FR GB SE**

(56) Entgegenhaltungen:
DD-A- 117 584
FR-A- 1 371 068
US-A- 2 338 932
US-A- 2 401 513
US-A- 3 325 982
US-A- 3 399 517

(73) Patentinhaber: **Klöckner-Humboldt-Deutz**
**Aktiengesellschaft**
**Deutz-Mülheimer-Strasse 111 Postfach 80 05 09**
**D-5000 Köln 80 (DE)**

(72) Erfinder: **Grobler, Werner-Hendrik**
**Schanzstrasse 8**
**D-8881 Haunsheim (DE)**
Erfinder: **Hönl, Josef**
**Paul-Böhm-Strasse 26**
**D-8882 Lauingen (DE)**
Erfinder: **Lührmann, Ewald**
**Lerchenweg 2**
**D-8882 Lauingen (DE)**
Erfinder: **Griemert, Heinz**
**Mozartstrasse 4**
**D-8883 Gundelfingen (DE)**

(74) Vertreter: **Haft, Berngruber, Czybulka**
**Postfach 14 02 46 Hans-Sachs-Strasse 5**
**D-8000 München 5 (DE)**

Courier Press, Leamington Spa, England.

EP 0 212 185 B1

**Beschreibung**

Die Erfindung betrifft einen Mähdrescher mit einer höhenverstellbaren Plattform, die aus einem Förderkanal und einem Mähtisch besteht, dessen vorderes Ende ein Hauptschneidwerk aufweist, sowie mit einem Zusatzschneidwerk, welches unterhalb des Hauptschneidwerks und in Fahrtrichtung gesehen nach hinten zu diesem versetzt angeordnet ist, um so das Erntegut in der Nähe des Bodens abzuschneiden während das Hauptschneidwerk die oberen Enden des Erntegutes abschneidet und wobei die Schnitthöhendifferenz zwischen Hauptschneiderk und Zusatzschneidwerk einstellbar ist.

Bei einem derartigen Mähdrescher wird das geerntete Gut über den Förderkanal der im Inneren des Mähdreschers angeordneten Dreschtrommel zugeführt, in der die Körner abgeschieden werden. Das ausgedroschene Stroh wird dabei über einen Hordenschüttler und mehrere Steilstufen dem rückwärtigen Ende des Mähdreschers zugeführt. Die ausgedroschenen Körner sowie Spreu und nicht ausgedroschene Ähren gelangen von der Kornabscheidevorrichtung auf einen Vorbereitungsboden, von dem aus sie einer Siebanordnung zugeführt werden. Vor der Siebanordnung, die durch eine geeignete Schütteleinrichtung in Schwingungen versetzt wird, ist oftmals ein Gebläse angeordnet um die Körner von der Spreu und sonstigen Verunreinigungen zu trennen. Die kleinen verhältnismäßig schweren Körner fallen dabei durch die Siebanordnung und werden z.B. über einen Körnerelevator einem Korntank zugeführt, während die leichtere Spreu und der Kurzstrohanteil über das rückwärtige Ende der Siebanordnung hinaus weggeblasen wird.

Mit derartigen Mähdreschern wird üblicherweise das Erntegut z.B. Getreide kurz über dem Boden abgeschnitten, so daß das gesamte Erntegut den Mähdrescher durchläuft. Das den Mähdrescher durchlaufende Stroh kann anschließend entweder in einem Schwad abgelegt werden um so von Strohbergungsmaschinen aufgenommen zu werden oder aber einen Strohhäcksler durchlaufen, die das den Mähdrescher verlassende Stroh zerkleinert und z.B. zum Zwecke des Unterpflügens auf dem Feld verteilt.

Um den Wirkungsgrad eines Mähdreschers zu erhöhen, wurde bereits vorgeschlagen, den Mähtisch mit einem zweiten Schneidwerk zu versehen, wobei die beiden Schneidwerke übereinander und in Fahrtrichtung des Mähdreschers gesehen hintereinander derart versetzt zueinander angeordnet sind, daß das eine Schneidwerk nur den oberen Teil des Ernteguts z.B. die Ähren, abschneidet und dem Mähdrescher zuführt, während das zweite, dahinter und darunter angeordnete Schneidwerk die übriggebliebenen Halme dicht über dem Boden abschneidet und auf dem Feld liegen läßt, so daß die Stengel den Mähdrescher nicht durchlaufen müssen. Dies weist den Vorteil auf, daß der Mähdrescher nur mit geringeren Strohmassen belastet wird.

So beschreibt die DD—PS 117 584 einen Mähdrescher zur wahlweisen kombinierbaren oder einzel durchführbaren Strohbergung und Strohdüngung mit einem höhenverstellbaren Haupt- und Zusatzschneidwerk, wobei das Hauptschneidwerk die oberen Teile mit den Fruchtständen des Halmfruchtstandes abschneidet, diese der Dresch- und Reinigungseinrichtung zuführt und danach als Strohschwad oder mit einer Strohzerkleinerungseinrichtung zerkleinert und verteilt ablegt, während das Zusatzschneidwerk die restlichen Halmteile abschneidet und diese in Form eines Strohteppichs oder über eine Querfördereinrichtung in einen gemeinsamen Strohschwad ablegt, wobei der Strohschwad anschließend durch Strohbergungsmaschinen aufgenommen und verarbeitet werden kann und der auf dem Feld verbleibende Strohteppich von Bodenbearbeitungsmaschinen in den Boden eingearbeitet werden kann.

Das Zusatzschneidwerk kann bei diesem bekannten Mähdrescher parallel hinter dem Hauptschneidwerk entweder direkt am Hauptschneidwerk als Zwischenachsschneidwerk oder als Nachläufervariante angeordnet sein.

Aus der SE—C—159 587 ist eine Einrichtung für Mähmaschinen für Grünfutter bekannt, welche außer dem dicht oberhalb des Bodens liegenden Schneidapparat einen zweiten im Abstand über diesem angeordneten Schneidapparat aufweist, der in Fahrtrichtung der Maschine gesehen, etwas vor dem unteren Schneidapparat angeordnet ist und wobei jedem der Schneidapparate eine rotierende Zufuhrvorrichtung für das Grünfutter zugeordnet ist zur Zufuhr des Grünfutters auf ein den beiden Schneidapparaten gemeinsam zugeordnetes Förderband.

Auch aus der FR—PS 1 371 068 ist eine Mähmaschine bekannt mit einem ersten Schneidwerk zum Abschneiden der oberen Teile des Erntegutes und einem zweiten dahinter und darunter angeordneten Schneidwerk um die von den Ähren befreiten Halme dicht über dem Boden abzuschneiden und auf dem Feld liegen zu lassen, ohne daß diese die Mähmaschine durchsetzen müssen.

Bei all diesen bekannten Mähdreschern ist das zweite tiefer liegende Schneidwerk starr mit dem Mähdrescher verbunden, so daß es sämtliche Bewegungen des Mähdreschers im Einsatz mitmacht und demzufolge keine gleichmäßige Schneidwirkung in gleichbleibendem Abstand über dem Boden ausführt. Ein weiterer Nachteil ist darin zu sehen, daß bei Mähdreschern mit großer Arbeitsbreite der gesamte Mähtisch für den Transport abgenommen werden muß und auf einem eigenen Anhänger hinter dem Mähdrescher mitgeführt werden muß, da sonst die zulässige Breite des Mähdreschers beim Strassentransport überschritten werden würde. Dazu ist es aber dann erforderlich, das zweite Schneidwerk separat abzubauen und zu verladen.

Aus der US—PS 24 01 513 ist schließlich ein Mähdrescher bekannt, mit einer Plattform, die eine Fördervorrichtung sowie ein Hauptschneidwerk aufweist, das am Vorderteil der Plattform angeordnet ist. Hinter dem Hauptschneidwerk und in Fahrtrichtung gesehen nach hinten versetzt unterhalb des Hauptschneidwerks ist ein Zusatzschneidwerk vorgesehen, um so das Erntegut in der Nähe des Bodens abzuschneiden, während das Hauptschneidwerk die oberen Enden des Erntegutes abschneidet. Eine geeignete Vorrichtung erlaubt die Schnitthöhendifferenz zwischen Hauptschneidwerk und Zusatzschneidwerk einzustellen. Das Zusatzschneidwerk ist an den unteren Enden zweier senkrechter Haltestäbe drehbar gelagert, wobei seine Horizontaleinstellung, d.h. der Schneidwinkel mit dem Boden von zwei ihm nachgeordneten Tasträdern abhängt, die durch eine Feder derart beaufschlagt werden, daß sie dem Bodenverlauf folgen, um so einen möglichst gleichmäßigen Bodenabstand des Zusatzschneidwerkes einzuhalten. Eine im Einsatz gleichbleibende horizontale Stellung nimmt jedoch das Zusatzschneidwerk gemäß dieser US—PS nur dann ein, wenn keinerlei Bodenunebenheiten vorhanden sind.

Aufgabe der vorliegenden Erfindung ist es, einen gattungsgemäßen Mähdrescher dahingehend zu verbessern, daß das tieferliegende Zusatzschneidwerk eine im Einsatz im wesentlichen horizontale Stellung einnimmt, um so einen gleichmäßigen Schnitt zu gewährleisten und daß kein separater Abbau des Zusatzschneidwerks für den Strassentransport mehr erforderlich ist.

Ausgehend von einem Mähdrescher der eingangs näher genannten Art wird zur Lösung dieser Aufgabe vorgeschlagen, daß der Mähtisch lösbar mit dem Förderkanal verbunden ist und das Zusatzschneidwerk an beiden Seiten des Mähtisches über je zwei hintereinander angeordnete Lenker gelenkig derart befestigt ist, daß es pendelnde Bewegungen um waagrechte Achsen durch die Anlenkpunkte am Mähtisch ausführen kann. Vorteilhaft ist es die beiden Lenker mit unterschiedlichen Längen zu versehen. Vorteilhafterweise schließen die Längsachsen der beiden Lenkerpaare je einen Winkel mit sich ein, de sich zum Boden hin öffnet.

Die oberen Anlenkpunkte der beiden Lenkerpaare am Mähtisch können im wesentlichen übereinanderliegen während die unteren Anlenkpunkte der Lenker am Zusatzschneidwerk im wesentlichen in derselben waagrechten Ebene liegen können.

Besonders vorteilhaft ist es, wenn sich an das Zusatzschneidwerk ein Schwadformer anschließt und wenn das Zusatzschneidwerk mit einer Einrichtung zur manuellen oder automatischen Höhenverstellung versehen ist.

Mit der erfindungsgemäßen Ausgestaltung der Aufhängung des Zusatzschneidwerks wird gewährleistet, daß dieses unabhängig von der Lage des Hauptschneidwerks eine im wesentlichen gleichbleibende horizontale Stellung zum Boden einnimmt und daß das Zusatzschneidwerk für den Strassentransport nicht mehr separat abgebaut und verladen werden muß.

Im folgenden wird die Erfindung anhand der Zeichnung näher erläutert, in der ein vorteilhaftes Ausführungsbeispiel dargestellt ist. Es zeigen:

Fig. 1 schematisch eine Seitenansicht des Vorderteils eines Mähdreschers und

Fig. 2 eine Hinteransicht des verladenen Mähtisches.

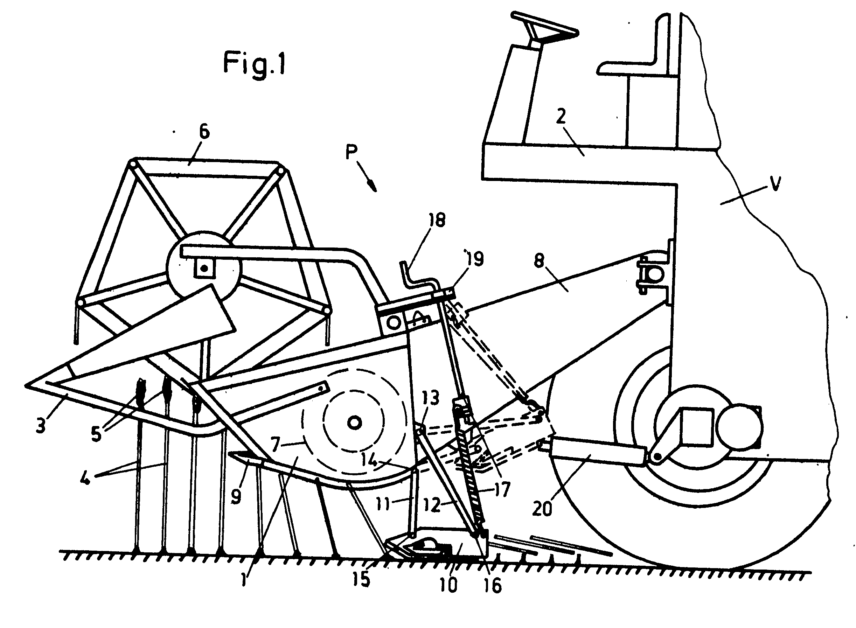

In Fig. 1 ist mit V das Vorderteil eines nicht näher dargestellten Mähdreschers mit seinem Führerstand 2 bezeichnet. Für den Ernteeinsatz ist am Vorderteil des Mähdreschers ein Mähtisch 1 mit daran anschließendem Förderkanal 8 befestigt, der über Hydraulikzylinder 20 höhenverstellbar ist. Dieser Mähtisch 1 weist an seinem vorderen Ende mehrere Halmteiler 3 auf, eine sich daran anschließende Haspel 6 und eine Einzugsschnecke 7 für das zu erntende Halmgut 4. Der Einzugsschnecke 7 ist ein Förderkanal 8 mit einem nicht näher aufgezeigten Förderaggregat nachgeschaltet.

Um nun die Ähren 5 des Halmgutes zu ernten und zur nicht dargestellten Dreschtrommel zu fördern, ist in Höhe des unteren Randes des Mähtisches 1 ein Hauptschneidwerk 9 vorgesehen, das den oberen Teil des Erntegutes 4 abschneidet und über die Einzugsschnecke 7 und Förderaggregat im Förderkanal 8 der Dreschtrommel zuführt.

In Fahrtrichtung des Mähdreschers gesehen dahinter und darunter ist ein Zusatzschneidwerk 10 vorgesehen, das die Halme des Erntegutes 4 dicht über dem Boden abschneidet und auf dem Feld liegen läßt. Das Schneidwerk 10 ist an seinen beiden Außenseiten mit den beiden Seitenwänden des Mähtisches 1 über jeweils zwei Lenker 11, 12 unterschiedlicher Länge derart gelenkig befestigt, daß es in einem gewissen Bereich pendelnde Bewegungen ausführen kann. Der Lenker 11 ist über zwei Gelenke 14, 15 mit der Seitenwand des Mähtisches bzw. dem Schneidwerk 10 verbunden und der Lenker 12 über zwei Gelenke 13, 16 mit der Seitenwand des Mähtisches bzw. dem Schneidwerk 10 verbunden.

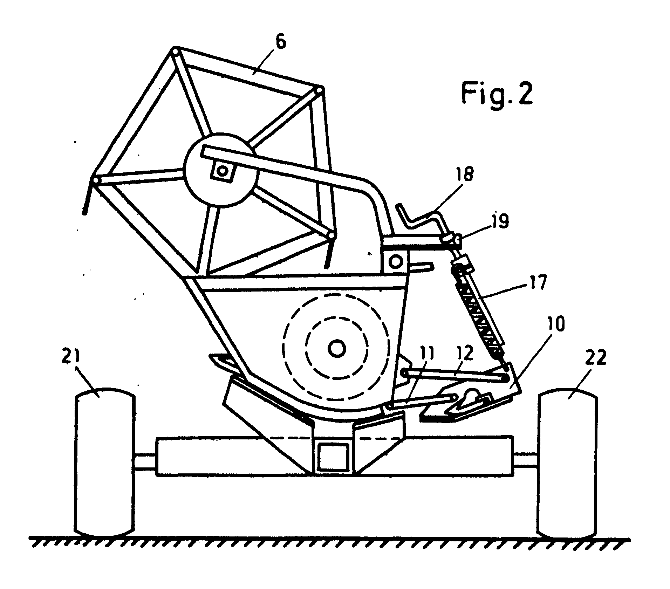

Zusätzlich ist das Zusatzschneidwerk 10 mit einer Einrichtung zur Höhenverstellung 17 über eine geeignete Halterung 19 des Mähtisches 1 verbunden. Diese Einrichtung kann eine Handkurbel 18 aufweisen um so das Schneidwerk von der in Figur 1 gezeigten Arbeitsstellung dicht über dem Boden in eine zweite gestrichelt angedeutete Ruhestellung zu verschwenken und dort zu arretieren, sofern das Zusatzschneidwerk im Einsatz nicht benötigt wird. Diese Stellung dient auch wie in Figur 2 dargestellt, dem Strassentransport, wobei hier der gesamte Mähtisch 1 vom Vorderteil V des Mähdreschers bzw. vom Förderkanal 8 abgenommen worden ist und auf einen durch die beiden Laufräder 21, 22 angedeuteten Plattformwagen gelegt wurde, der dann beim Strassentransport an den Mähdrescher angehängt wird.

Wie Figur 1 ferner erkennen läßt, sind die oberen Anlenkpunkte 13, 14 der beidseitigen Lenkerpaare 11, 12 in Arbeitsstellung der Maschine im wesentlichen übereinander am Mähtisch befestigt, während ihre unteren Anlenkpunkte 15, 16 am Schneidwerk 10 im wesentlichen in einer waagerechten Ebene liegen. Dadurch bilden die beiden Lenker 11, 12 einen Winkel zwischen sich, dessen Öffnung zum Boden zeigt.

An das Zusatzschneidwerk 10 kann sich noch ein Schwadformer anschließen (nicht dargestellt), der die abgeschnittenen Halme zu einem leicht aufnehmbaren Schwad formt.

Die Einrichtung zur Höhenverstellung kann an ihrem unteren Ende mit einer Spiralfeder versehen sein, die die Pendelbewegungen des Zusatzschneidwerks 10 etwas dämpft.

Muß einmal kurzzeitig Lagergetreide gemäht werden, wofür kein Zusatzschneidwerk erforderlich ist, so verschwenkt dieses bei entsprechender Einstellung der Feder der Einrichtung zur Höhenverstellung bis zum hinteren Ende des Mähtisches. Beim Hochziehen des Mähtisches geht das Zusatzschneidwerk automatisch wieder in Arbeitsstellung. Bei Bodenunebenheiten kann das Zusatzschneidwerk nach hinten und nach oben ausweichen. Ferner kann bei hohem Getreide die Mähtischhöhe beliebig verändert werden, ohne daß, in Fahrtrichtung gesehen, die horizontale Einstellung des Zusatzschneidwerks wesentlich verändert wird.

Das Zusatzschneidwerk kann von einem Hydraulikmotor in herkömmlicher Weise angetrieben werden. Beim Abkoppeln des Mähtisches werden in bekannter Weise nur die beiden Hydraulikschnellverschlüsse gelöst, während das Zusatzschneidwerk selbst unverändert am Mähtisch bleibt.

## Patentansprüche

1. Mähdrescher mit einer höhenverstellbaren Plattform, die aus einem Förderkanal und einem Mähtisch besteht, dessen vorderes Ende ein Hauptschneidwerk aufweist, sowie mit einem Zusatzschneidwerk, welches unterhalb des Hauptschneidwerks und in Fahrtrichtung gesehen nach hinten zu diesem versetzt angeordnet ist, um so das Erntegut in der Nähe des Bodens abzuschneiden, während das Hauptschneidwerk die oberen Enden des Erntegutes abschneidet und wobei die Schnitthöhendifferenz zwischen Hauptschneidwerk und Zusatzschneidwerk einstellbar ist; dadurch gekennzeichnet, daß der Mähtisch lösbar mit dem Förderkanal verbunden ist und das Zusatzschneidwerk (10) an beiden Seiten des Mähtisches (1) über je zwei hintereinander angeordnete Lenker (11, 12) gelenkig derart befestigt ist, dass es pendelnde Bewegungen um die waagrechten Achsen durch die Anlenkpunkte am Mähtisch ausführen kann.

2. Mähdrescher nach Anspruch 1, dadurch gekennzeichnet, daß die beiden Lenker (11, 12) unterschiedliche Längen aufweisen.

3. Mähdrescher nach einem der Ansprüche 1 oder 2, dadurch gekennzeichnet, daß in Arbeitsstellung die Längsachsen der beiden Lenker (11, 12) einen Winkel mit sich einschließen, der sich zum Boden hin öffnet.

4. Mähdrescher nach Anspruch 3, dadurch gekennzeichnet, daß die oberen Anlenkpunkte (13, 14) der beiden Lenker (11, 12) im wesentlichen übereinander liegen.

5. Mähdrescher nach Anspruch 4, dadurch gekennzeichnet, daß die unteren Anlenkpunkte (15, 16) der beiden Lenker (11, 12) am Zusatzschneidwerk (10) im wesentlichen in derselben waagrechten Ebene liegen.

6. Mähdrescher nach einem der vorhergehenden Ansprüche, dadurch gekennzeichnet, daß sich an das Zusatzschneidwerk (10) ein Schwadformer anschließt.

7. Mähdrescher nach einem der vorhergehenden Ansprüche, dadurch gekennzeichnet, daß das Zusatzschneidwerk (10) mit einer Einrichtung (17, 18) zur manuellen oder automatische Höhenverstellung und Arretierung versehen ist.

## Revendications

1. Moissonneuse-batteuse comportant une plateforme réglable en hauteur qui est composée d'un convoyeur d'alimentation et d'un tablier de coupe dont l'extrémité avant comprend un système principal de coupe, ainsi qu'un système additionnel de coupe qui est placé au dessous du système principal de coupe et, vu dans le sens de déplacement, décalé vers l'arrière par rapport à celui-ci, de manière à couper la moisson près du sol tandis que le système principal de coupe coupe les extrémités supérieures de la moisson et tel que la différence des hauteurs de coupe entre les systèmes principal et additionnel est réglable; caractérisée en ce que le tablier de coupe (1) est lié de façon démontable au convoyeur d'alimentation et en ce que le système additionnel de coupe est fixé sur les deux côtés du tablier de coupe (1) au moyen de deux bras (11, 12) de guidage placés l'un derrière l'autre et articulés d'une manière telle que le système peut exécuter des mouvements oscillatoires autour des axes horizontaux passant par les points d'articulation sur le tablier de coupe.

2. Moissonneuse-batteuse selon la revendication 1, caractérisée en ce que les deux bras de guidage (11, 12) présentent des longueurs différentes.

3. Moissonneuse-batteuse selon l'une quelconque des revendications 1 et 2, caractérisée en ce que, en position de fonctionnement, les axes longitudinaux des deux bras de guidage (11, 12) délimitent un angle qui s'ouvre vers le sol.

4. Moissonneuse-batteuse selon la revendication 3, caractérisée en ce que les points supérieurs d'articulation (13, 14) des deux bras de guidage (11, 12) se trouvent sensiblement l'un au dessus de l'autre.

5. Moissonneuse-batteuse selon la revendication 4, caractérisé en ce que les points inférieurs d'articulation (15, 16) des deux bras de guidage (10) sur le système additionnel de coupe (10) se trouvent sensiblement dans le même plan horizontal.

6. Moissonneuse-batteuse selon l'une quelconque des revendications 1 à 5, caractérisée en ce qu'une javeleuse se fixe sur le système additionnel de coupe (10).

7. Moissonneuse-batteuse selon l'une quelconque des revendications 1 à 6, caractérisée en ce que le système additionnel de coupe (10) est muni d'un dispositif (17, 18) de réglage en hauteur et de blocage manuel ou automatique.

## Claims

1. Combine harvester having a vertically adjustable platform which comprises a conveying duct and a reaping table, the front end of which has a cutting unit, and having an additional cutting unit, which is arranged below the main cutting unit and offset rearwards relative to the latter as seen in the direction of travel in order, in this way, to cut off the crop to be harvested in the vicinity of the ground while the main cutting unit cuts off the upper ends of the crop to be harvested and the difference in cutting height between the main cutting unit and the additional cutting unit being adjustable, characterized in that the reaping table is connected releasably to the conveying duct and in that the additional cutting unit (10) is secured in articulated fashion on both sides of the reaping table (1), in each case via two connecting rods (11, 12) arranged one behind the other, in such a way that it can execute swinging movements about horizontal axes through the points of articulation on the reaping table.

2. The combine harvester according to Claim 1, characterized in that the two connecting rods (11, 12) are of different lengths.

3. Combine harvester according to either of Claims 1 or 2, characterized in that, in the working position, the longitudinal axes of the two connecting rods (11, 12) enclose an angle between them which opens towards the ground.

4. Combine harvester according to Claim 3, characterized in that the upper points (13, 14) of articulation of the two connecting rods (11, 12) lie essentially one above the other.

5. Combine harvester according to Claim 4, characterized in that the lower points (15, 16) of articulation of the two connecting rods (11, 12) on the additional cutting unit (10) lie essentially in the same horizontal plane.

6. Combine harvester according to one of the preceding claims, characterized in that adjoining the additional cutting unit (10) there is a windrower.

7. Combine harvester according to one of the preceding claims, characterized in that the additional cutting unit (10) is provided with an arrangement (17, 18) for manual or automatic vertical adjustment and locking.

Fig.1

Fig. 2

EP 0 212 185 B1